# EUROPEAN PATENT SPECIFICATION

(11) **EP 2 091 272 B1**
(45) Date of publication and mention of the grant of the patent: **28.10.2015**
(21) Application number: 09152040.3
(22) Date of filing: 04.02.2009
(51) Int. Cl.: H04L 29/08, H04W 8/08, H04W 40/20, H04L 29/12

(54) **Method and device for constructing a node identifier**
Verfahren und Vorrichtung zur Konstruktion einer Knotenidenfikation
Procédé et dispositif pour la construction d'un identificateur de noeud

(30) Priority: 05.02.2008 CN 200810065363
(43) Date of publication of application: 19.08.2009
(60) Divisional application: 13181309.9
(73) Proprietor: Huawei Technologies Co., Ltd., Longgang District Shenzhen, Guangdong 518129 (CN)
(72) Inventor: Shi, Guangyu, Shenzhen Guangdong 518129 (CN); Gong, Hao, Shenzhen Guangdong 518129 (CN); Chen, Jian, Shenzhen Guangdong 518129 (CN)
(74) Representative: Thun, Clemens

(56) References cited:
- EP-A- 1 248 441
- US-A1- 2003 182 421
- US-A1- 2004 249 970
- STOICA I ET AL: "MIT-LCS-TR-819 - Chord: A Scalable Peer-to-peer Lookup Service for Internet Applications", http://www.lcs.mit.edu/publications/pubs/p s/MIT-LCS-TR-819.ps , 15 May 2005 (2005-05-15), XP002328538, Retrieved from the Internet: URL:www.lcs.mit.edu/publications/pubs/ps/M IT-LCS-TR-819.ps [retrieved on 2005-05-15]
- ARTIGAS M S ET AL: "Cyclone: A Novel Design Schema for Hierarchical DHTs", PEER-TO-PEER COMPUTING, 2005. P2P 2005. FIFTH IEEE INTERNATIONAL CONFE RENCE ON KONSTANZ, GERMANY 31-02 AUG. 2005, PISCATAWAY, NJ, USA,IEEE, 31 August 2005 (2005-08-31), pages 49-56, XP010859350, ISBN: 978-0-7695-2376-7
- ZHIYONG XU ET AL: "HIERAS: a DHT based hierarchical P2P routing algorithm", PARALLEL PROCESSING, 2003. PROCEEDINGS. 2003 INTERNATIONAL CONFERENCE ON 6-9 OCT. 2003, PISCATAWAY, NJ, USA,IEEE, 6 October 2003 (2003-10-06), pages 187-194, XP010664168, ISBN: 978-0-7695-2017-9

## Description

### FIELD OF TECHNOLOGY

The present invention relates to an electronic communication technical field, and more particularly, to a method and device for constructing a node identifier.

### BACKGROUND

Being different from a conventional client/server mode, there is not a central server node in a peer-to-peer (P2P) network. Each node may be used as the server to provide services for other nodes, and may also enjoy the services provided by other node serving as the server. Therefore, in the P2P network, all nodes are equal in position, and each node is referred to as a peer.

The P2P network is a self-organized configuration network system. In the network, the behaviors of joining the network or exiting the network performed by each Peer are random. Similarly, in the network, for the communication between each two Peers, after a relevant Key is found according to logical distributed hash table (DHT), a lower layer physical link is randomly selected to perform the route connecting communication. In this manner, when the number of the Peers or the communication amount in the network gradually increases, the flow in the whole network is unorganized and out of order, and a great amount of data interaction is performed through a whole network search or operation. Finally, a backbone network with an insufficient bandwidth source and an inter-domain link are seriously consumed, thereby generating congestion.

An identifier constructing method is disclosed by STOICA I et. al, in "MIT-LCS-TR-819-Chord: a scalable peer-to-peer lookup service for internet applications", cited from internet: URL: http://www.lcs.mit.edu/publications/pubs/ps/MIT MIT-LCS-TR-819.ps. The method includes appending a unique suffix (such as the node's IP address) to the identifier for each node to ensure unique node identifiers.

A method for generating an identifier for a peer-to-peer overlay node is also disclosed by Castor et. al, in US 2004/0249970 filed on Jun. 6, 2003. The Castor's method discloses assigning a peer-to-peer overlay node a node identifier defined in a hierarchical namespace designating one or more organizational levels, wherein an organizational boundary in the node identifier is aligned with a routing boundary of the node identifier.

A peer-to-peer name resolution protocol is disclosed by Christian et. al, in EP 1248441 A2. The Christian's methods includes receiving at a first node a request message from a request node seeking address resolution of a second node having a unique number identifier, the request message including address information of the requester node; populating a routing table of the first node with the address information of the requester node analyzing the request message; generating a response message to the requester node identifying address information of the first node as best matching for the request message when one of the three conditions is met; otherwise determining a suitable next hop for the request and forwarding the request message to the suitable next hop.

A method of distribution of identities and reputation on a network is disclosed by Kowert et. al, in US 2003/0182421. Kowert et. al disclose a method including distributing reputation information for two or more nodes on a network among a plurality of nodes on the network; requesting reputation information for a node no the network; receiving one or more responses to said requesting reputation information for the node from at least one of the plurality of nodes, wherein the responses to said request for reputation information for the node each includes reputation information corresponding to the node; and determining a reputatioin of the node from the received reputation information.

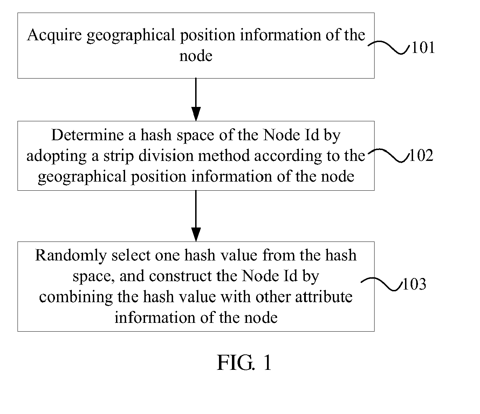

A Cyclone ID assignment method is disclosed by ARTIGAS M S et. al, at section 3.1 in "Cyclone: A novel design schema for Hierarchical DHTs", cited from peer-to-peer computing, 2005, p2p 2005. FIFTH IEEE INTERNATIONAL CONFERENCE ON KONSTANZ, GERMANY 31-02-AUG. 2005, PISCATAWAY, NJ, USA, IEEE, 31 August 2005, Pages 49 - 56, XP010859350, ISBN: 978-0-7695-2376-7. A fragment of the hierarchical at URV is shown in Figure 1.

A scalable peer-to-peer lookup service for inter applications is disclosed by ZHIYONG et. al, in "HIERAS: a DHT based hierarchical P2P routing algorithm", cited from PARALLEL PEOCESSING, 2003. PROCEEDINGS. 2003 INTERNATIONAL CONFERENCE ON 6-9 OCT. 2003, PISCATAWAY, NJ, USA, IEEE, 6 October 2003, pages 187-197, XP010664168, ISBN: 978-0-7695-2017-9. ZHIYONG et. al, teach employing a suffix for cluster identification provides good scaling properties like load balancing and routing performance.

### SUMMARY

The present invention provides a method and device for constructing a node Id.

The present invention provides a method for constructing a node Id, which includes the following steps.

Geographical region information of the node is acquired.

An article of the node Id is determined by adopting a strip division method according to the geographical region information of the node, wherein a hash space is divided into N strips, and each strip is divided into Z articles, wherein Z is the number of the regions, and wherein the node randomly selects one strip from the hash space, then finds the article belongs to the region of the node from the strip.

One hash value is randomly selected from the article, and the node Id is constructed by combining the hash value with other attribute information of the node.

The present invention further provides a device for constructing a node Id, which includes an acquiring unit, a determining unit, and a constructing unit.

The acquiring unit is adapted to acquire geographical region information of a node.

The determining unit is adapted to determine an article of the node Id by adopting a strip division method according to the geographical region information of the node, wherein a hash space is divided into N strips, and each strip is divided into Z articles, wherein Z is the number of the regions, and wherein the node randomly selects one strip from the hash space, then finds the article belongs to the region of the node from the strip.

The constructing unit is adapted to randomly select one hash value from the article, and construct the node Id by combining the hash value with other attribute information of the node.

### BRIEF DESCRIPTION OF THE DRAWINGS

Figure 1 is a schematic flow chart of a method for constructing a node Id according to an embodiment of the present invention;
Figure 2 is a schematic view of region information divided by strips according to the embodiment of the present invention;
Figure 3 is a schematic view of a device for constructing a node Id according to the embodiment of the present invention;

### DETAILED DESCRIPTION

In the following, a detailed description of the technical solution of the present invention is given with the accompanying drawings.

Referring to Figure 1, the embodiment of the present invention provides a method for constructing a node Id, which includes the following steps.
Step 101: Geographical position information of a node is acquired.

When joining a network, the node usually discloses its geographical position information, and the geographical position information of the node may be acquired by a collecting manner, or may be acquired by an actively acquiring manner.
Step 102: A hash space of the node Id is determined by adopting a strip division method according to the geographical position information of the node.
Step 103: One hash value is randomly selected from the hash space, and the node Id (for example, the Node Id) is constructed by combining the hash value with other attribute information of the node.

The hash value serves as a part of the node Id (for example, a prefix, a suffix or a certain key field).

The geographical position information is geographical region information, such as, Shenzhen city, Guangzhou city, Guangdong province of China, and so on.

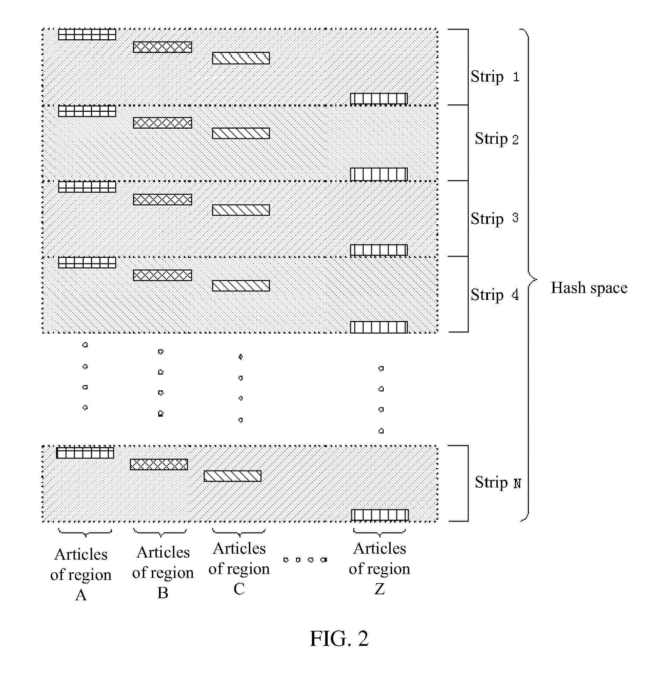

Referring to Figure 2, in Steps 102 and 103, particularly, a strip division method may be adopted for selecting the Id. Each region is respectively an article collection of one filling manner in the figure, the whole hash space may be divided into N strips, and each strip is divided into z articles, where z is the number of the regions. The node Peer of each region randomly selects one hash value from the articles of the region thereof as the prefix or suffix or certain key field of its own Id, and construct the node Id by combining the hash value with other attribute information of the node.

The other attribute information of the node may be a name of the node, an attribute of node IP, a latitude of the node or a longitude of the node.

The other attribute of the node may also be a combination of two of the name of the node, the attribute of the node IP, the latitude of the node and the longitude of the node.

The other attribute of the node may also be a combination of three of the name of the node, the attribute of the node IP, the latitude of the node and the longitude of the node.

It may be known from the above-mentioned that a node Id assignment mechanism, with which the hash space is averagely divided according to the geographical region position, is well achieved through the method, and the nodes in a large region are approximately averagely distributed into each article by the strips, and the larger the region is, the more scattered the distribution is.

For example, in an Id setting rule, Shenzhen city belongs to the region B, so that when one node located in Shenzhen city joins the network, the node randomly selects one strip from the hash space, then finds a hash value scope article belonging to the region B from the strip, randomly selects one hash value from the hash scope as the prefix (or suffix or certain key field) of the Id, and constructs the node Id by combining the hash value with other attribute information of the node.

It may be known that the detailed geographical position of the node may be deduced with the certain key field in one node Id and the strip division rule through such one strip division mechanism for selecting the Id so as to obtain subscriber position information from the node Id.

In the embodiment of the present invention, the process of constructing its own Id of the node may be finished by the node own, or may be uniformly finished by a central server, and then the node requests distribution of the central server.

The embodiment of the present invention further provides a device for constructing the node Id. Based on the realization of the above method, the device may realize the above-mentioned method for constructing the node Id. The device may be disposed on the node, and may also be disposed on the server or other telecommunication devices.

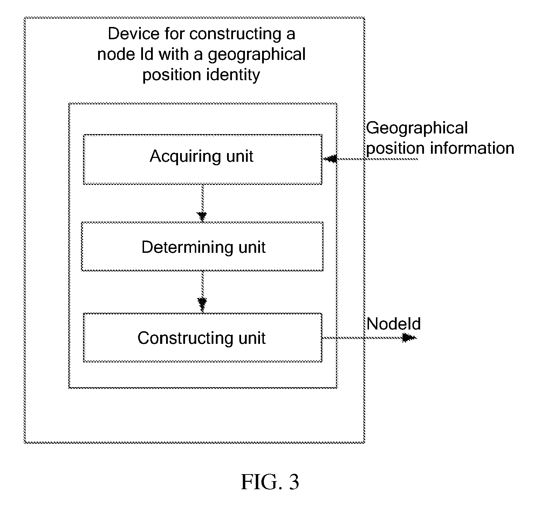

Referring to Figure 3, a device for constructing the node Id, which is realized based on the above method, includes an acquiring unit, a determining unit and a constructing unit.

The acquiring unit is adapted to acquire geographical position information of the node.

The determining unit is adapted to determine a hash space of the node Id by adopting a strip division method according to the geographical position information of the node.

The constructing unit is adapted to randomly select one hash value from the hash space, and construct the node Id by combining the hash value with other attribute information of the node.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the scope of the present invention and covered in the claims of the present invention.

## Claims

1. A method for constructing a node Id, comprising:
acquiring (101) geographical region information of a node;
determining (102) an article of the node Id by adopting a strip division method according to the geographical region information of the node, wherein a hash space is divided into N strips, and each strip is divided into Z articles, wherein Z is the number of the regions, and wherein the node randomly selects one strip from the hash space, then finds the article that belongs to the region of the node from the strip; and
randomly selecting (103) one hash value from the article and constructing the node Id by combining the hash value with other attribute information of the node.

2. The method according to claim 1, wherein the other attribute information comprises any one or combination of a name of the node, an IP attribute of the node, a latitude of the node and a longitude of the node.

3. The method according to claim 1 or 2, wherein the hash value serves as a prefix, a suffix or a key field of the node Id.

4. A device for constructing a node Id, comprising:
an acquiring unit adapted to acquire geographical region information of a node;
a determining unit adapted to determine an article of the node Id by adopting a strip division method according to the geographical region information of the node, wherein a hash space is divided into N strips, and each strip is divided into Z articles, wherein Z is the number of the regions, and wherein the node randomly selects one strip from the hash space, then finds the article that belongs to the region of the node from the strip; and
a constructing unit adapted to randomly select one hash value from the article, and construct the node Id by combining the hash value with other attribute information of the node.

5. The device according to claim 4, wherein the other attribute information comprises at least one of a name of the node, an IP attribute of the node, a latitude of the node, and a longitude of the node.

6. The device according to claim 4, wherein the hash value serves as one of a prefix, a suffix, and a key field of the node ID.

## Patentansprüche

1. Verfahren zum Aufbauen einer Knoten-Id, das Folgendes umfasst:
Erfassen (101) von Informationen über den geographischen Bereich eines Knotens;
Bestimmen (102) eines Eintrags der Knoten-Id durch Einsetzen eines Streifenaufteilungsverfahrens gemäß den Informationen über den geographischen Bereich des Knotens, wobei ein Hash-Raum in N Streifen unterteilt wird, und jeder Streifen in Z Einträge unterteilt wird, wobei Z die Anzahl der Bereiche ist, und wobei der Knoten zufällig einen Streifen aus dem Hash-Raum auswählt, dann den Eintrag findet, der zu dem Bereich des Knotens aus dem Streifen gehört; und
zufälliges Auswählen (103) eines Hash-Werts aus dem Eintrag und Aufbauen der Knoten-Id durch Kombinieren des Hash-Werts mit anderen Attributinformationen des Knotens.

2. Verfahren nach Anspruch 1, wobei die anderen Attributinformationen einen Namen des Knotens oder ein IP-Attribut des Knotens oder eine geographische Breite des Knotens oder eine geographische Länge des Knotens oder eine Kombination daraus umfassen.

3. Verfahren nach Anspruch 1 oder 2, wobei der Hash-Wert als ein Präfix, ein Suffix oder ein Schlüsselfeld der Knoten-Id dient.

4. Vorrichtung zum Aufbauen einer Knoten-Id, die Folgendes umfasst:
eine Erfassungseinheit, die ausgelegt ist, Informationen über den geographischen Bereich eines Knotens zu erfassen;
eine Bestimmungseinheit, die ausgelegt ist, einen Eintrag der Knoten-Id durch Einsetzen eines Streifenaufteilungsverfahrens gemäß den Informationen über den geographischen Bereich des Knotens zu bestimmen, wobei ein Hash-Raum in N Streifen unterteilt ist, und jeder Streifen in Z Einträge unterteilt ist, wobei Z die Anzahl der Bereiche ist, und wobei der Knoten zufällig einen Streifen aus dem Hash-Raum auswählt, dann den Eintrag findet, der zu dem Bereich des Knotens aus dem Streifen gehört; und
eine Aufbaueinheit, die ausgelegt ist, zufällig einen Hash-Wert aus dem Eintrag auszuwählen und die Knoten-Id durch Kombinieren des Hash-Werts mit anderen Attributinformationen des Knotens aufzubauen.

5. Vorrichtung nach Anspruch 4, wobei die anderen Attributinformationen einen Namen des Knotens und/oder ein IP-Attribut des Knotens und/oder eine geographische Breite des Knotens und/oder eine geographische Länge des Knotens umfassen.

6. Vorrichtung nach Anspruch 4, wobei der Hash-Wert als ein Präfix oder ein Suffix oder ein Schlüsselfeld der Knoten-ID dient.

## Revendications

1. Procédé de construction d'un identifiant de noeud, comportant les étapes consistant à :
acquérir (101) des informations de région géographique d'un noeud ;
déterminer (102) un article de l'identifiant de noeud en adoptant un procédé de division en bandes en fonction des informations de région géographique du noeud, un espace de hachage étant divisé en N bandes et chaque bande étant divisée en Z articles, Z étant le nombre des régions, et le noeud sélectionnant aléatoirement une bande à partir de l'espace de hachage, puis identifiant l'article qui appartient à la région du noeud à partir de la bande ; et
sélectionner aléatoirement (103) une valeur de hachage à partir de l'article et construire l'identifiant de noeud en combinant la valeur de hachage avec d'autres informations d'attributs du noeud.

2. Procédé selon la revendication 1, les autres informations d'attributs comportant une information quelconque ou une combinaison d'informations parmi un nom du noeud, un attribut IP du noeud, une latitude du noeud et une longitude du noeud.

3. Procédé selon la revendication 1 ou 2, la valeur de hachage servant de préfixe, de suffixe ou de champ-clé de l'identifiant de noeud.

4. Dispositif de construction d'un identifiant de noeud, comportant :
une unité d'acquisition prévue pour acquérir des informations de région géographique d'un noeud ;
une unité de détermination prévue pour déterminer un article de l'identifiant de noeud en adoptant un procédé de division en bandes en fonction des informations de région géographique du noeud, un espace de hachage étant divisé en N bandes et chaque bande étant divisée en Z articles, Z étant le nombre des régions, et le noeud sélectionnant aléatoirement une bande à partir de l'espace de hachage, puis identifiant l'article qui appartient à la région du noeud à partir de la bande ; et
une unité de construction prévue pour sélectionner aléatoirement une valeur de hachage à partir de l'article et construire l'identifiant de noeud en combinant la valeur de hachage avec d'autres informations d'attributs du noeud.

5. Dispositif selon la revendication 4, les autres informations d'attributs comportant au moins une information parmi un nom du noeud, un attribut IP du noeud, une latitude du noeud et une longitude du noeud.

6. Dispositif selon la revendication 4, la valeur de hachage servant de préfixe, de suffixe ou de champ-clé de l'identifiant de noeud.
